Europäisches Patentamt

European Patent Office

Office européen des brevets

(11) Veröffentlichungsnummer: **0 216 388**
**A2**

## (12) EUROPÄISCHE PATENTANMELDUNG

(21) Anmeldenummer: 86113256.1

(51) Int. Cl.⁴: **B01D 53/34**

(22) Anmeldetag: 26.09.86

(30) Priorität: 27.09.85 DE 3534526
10.04.86 DE 3612123

(43) Veröffentlichungstag der Anmeldung:
01.04.87 Patentblatt 87/14

(84) Benannte Vertragsstaaten:
AT BE CH DE FR GB LI NL

(71) Anmelder: **Linde Aktiengesellschaft**
**Abraham-Lincoln-Strasse 21**
**D-6200 Wiesbaden(DE)**

(72) Erfinder: **Lassmann, Eberhard, Dr. rer. nat.**
**Weiherwiese 21**
**D-8196 Eurasburg(DE)**
Erfinder: **Helmling, Robert**
**Planegger Strasse 129**
**D-8000 München 60(DE)**
Erfinder: **Beran, Franz**
**Falkenhorstweg 2**
**D-8000 München 71(DE)**

(74) Vertreter: **Schaefer, Gerhard, Dr.**
**Linde Aktiengesellschaft Zentrale**
**Patentabteilung**
**D-8023 Höllriegelskreuth(DE)**

(54) **Verfahren zum Auswaschen von NO und/oder SO2 aus Gasgemischen.**

(57) Es wird ein Verfahren zur Auswaschung von NO und/oder $SO_2$ aus Abgasen wie z.B. Rauchgasen beschrieben, das mit Fe-II-Salzen in nichtwäßrigen Lösungsmitteln arbeitet. Das Waschmittel läßt sich nach seiner Beladung einfach durch Erwärmung und/oder Drucksenkung regenerieren, wonach das Waschmittel wieder einsatzfähig ist. Eine durch Oxidation eintretende geringfügige Verringerung der Konzentration an Fe-II kann mit einfachen Mitteln ausgeglichen werden. Das Verfahren erlaubt es, NO bzw. $NO_x$ allein oder zusammen mit $SO_2$ auszuwaschen. Soll $SO_2$ allein aus einem Gasgemisch ausgewaschen werden, kann der Zusatz von Fe-II-Salzen entfallen.

## Verfahren zum Auswaschen von NO und/oder SO₂ aus Gasgemischen

Die Erfindung betrifft ein Verfahren zum Auswaschen von NO und/oder $SO_2$ aus NO- und/oder $SO_2$-haltigen Gasgemischen mit einem Eisen-II-Salze und Lösungsmittel enthaltenden Waschmittel.

Die Luftverschmutzung, die sich insbesondere in Smogepisoden dramatisch äußert, geht überwiegend auf die großindustrielle Energieerzeugung und sonstige großindustrielle Produktionen (Eisen-und Stahlerzeugung, Erdölveredelung) und auf Autoabgase zurück. Die Hauptkomponenten, die die Luftverschmutzung ausmachen,, sind CO, $SO_2$, Kohlenwasserstoffe, $NO_x$ und Schwebeteilchen. $SO_2$ wird häufig zusammen mit Schwebeteilchen als Indikator für die gesamte Luftverschmutzung angesehen. Seine Emission durch Verbrennung schwefelhaltiger fossiler Energieträger wird in der Bundesrepublik Deutschland auf jährlich mehrere Millionen Tonnen geschätzt. $SO_2$ ist leicht wasserlöslich und wirkt vor allem reizend auf die Schleimhäute der oberen und mittleren Atemwege und des Auges. $NO_x$ verdanken ihre Entstehung der Bildung aus den Elementen bei Verbrennungsvorgängen, wobei das primär entstehende NO in der Luft alsbald zu $NO_2$ oxidiert wird, das aufgrund seiner niedrigen Wasserlöslichkeit vor allem in den Lungenalveolen resorbiert wird und dort eine Reizwirkung ausübt. Das NO ist aber hauptsächlich deswegen als außerordentlich schädliche Luftverunreinigung anzusehen, weil es unter der Wirkung ultravioletter Strahlen mit Kohlenwasserstoffen, CO und Wasserdampf, wie sie in Autoabgasen vorkommen, unter Bildung photochemischer Oxidationsprodukte und insbesondere Ozon zu reagieren vermag. Unter den photochemischen Reaktionsprodukten sind insbesondere organische Peroxide und Salpetersäureverbindungen der Peressigsäure zu nennen, die eine erhebliche Toxizität für die Atemwege besitzen und Sachgüter und Vegetation - schädigen.

Es sind deshalb bereits zahlreiche Vorschläge für Verfahren bekannt, die darauf abzielen, aus Rauchgasen $SO_2$, $NO_x$ oder NO allein oder in Kombination zu entfernen, um diese Stoffe an einem Eintritt in die Atmosphäre zu hindern. Hierbei unterscheidet man sogenannte Trocken-und sogenannte Naßverfahren. Bei den Naßverfahren unterscheidet man saure und alkalische Verfahren. Bei den sauren Verfahren werden die Abgase mit kalter Salpetersäure gewaschen und die absorbierten Stickstofoxide durch Erwärmen und/oder Strippen mit Luft entweder wieder in die Absorption zurückgeführt oder katalytisch oxidiert. Bei den alkalischen Verfahren,die oft den sauren nachgeschaltet sind, werden die Abgase mit wäßrigen Lösungen der Hydroxide oder Carbonate von Natrium, Calcium oder Magnesium gewaschen.

Diese Verfahren vermochten jedoch bis jetzt noch nicht restlos zu befriedigen, da sie entweder nur bei hohen Drücken oder nur bei niedrigen Drücken eingesetzt werden können (Ullmanns Encyklopädie der technischen Chemie, 4. Auflage, Band 20, Seite 328).

In neuerer Zeit ist ein Verfahren bekannt geworden (US-PS 4,418,044), das es gestattet, $NO_x$ und $SO_2$ gleichzeitig aus Abgasen,Rauchgasen etc. zu entfernen. Bei diesem bekannten Verfahren wird mit Lösungen von Eisen-II-Ionen und $S_2O_3$-Ionen gearbeitet. Die Fe-II-Ionen werden in der Regel in Form der Sulfate, die $S_2O_3$-Ionen in Form der Kalium-oder Ammoniumsalze zugegeben. Als Lösungsmittel für diese Substanzen wird in erster Linie Wasser verwendet, dem aber bestimmte Mengen nichtwäßriger Lösungsmittel, z.B. Methanol oder Glykol, zugesetzt werden. In einem Beispiel ist angegeben, daß eine insgesamt 200 Mol umfassende Lösung 40 Mol Methanol enthält. Außerdem wird bei diesem bekannten Verfahren ein Mol-Verhältnis $S_2O_3^{--}/Fe^{++}$ von mindestens 5,0 vorgeschrieben, da man festgestellt hatte, daß bei einem geringeren Mol-Verhältnis die Absorption von NO im Waschmittel stark absinkt.

Dieses bekannte Verfahren hat jedoch den Nachteil, eines sehr hohen Chemikalienverbrauchs. So werden z.B. pro Mol absorbiertes NO (30 g) 190 g $K_2S_2O_3$ und 49 g $H_2SO_4$ verbraucht. Außerdem ist das bekannte Waschmittel offenbar nicht regenerierbar, bereitet also erhebliche Abwasserprobleme.

Es ist daher die Aufgabe der vorliegenden Erfindung, ein Verfahren zu schaffen, das von den Nachteilen der bekannten Verfahren frei ist und das es gestattet, NO und/oder $SO_2$ aus Abgasen, Rauchgasen etc. zu entfernen.

Diese Aufgabe wird erfindungsgemäß dadurch gelöst, daß als Lösungsmittel ein praktisch wasserfreies nichtwäßriges Lösungsmittel eingesetzt und das Waschmittel nach Beladung mit NO und/oder $SO_2$ durch Regenerierung von diesen befreit und wieder eingesetzt wird.

Beim erfindungsgemäßen Verfahren wird also, im Gegensatz zu dem aus der US-PS 4,418,044 bekannten Verfahren, mit einem Waschmittel gearbeitet, das zum weit überwiegenden Teil aus einem nichtwäßrigen Lösungsmittel besteht. Im Idealfall könnte das erfindungsgemäße Verfahren auch mit einem wasserfreien nichtwäßrigen Lösungsmittel betrieben werden. Im wasserfreien Zustand entfaltet das erfindungsgemäße Waschmittel nämlich seine größte Lösefähigkeit für NO und/oder SO₂. Jedoch ist zu berücksichtigen, daß beispielsweise Rauchgase stets feucht sind, so daß das Waschmittel während des Betriebes immer gewisse Wassermengen aufnimmt. Bei der Regenerierung des Waschmittels wird mit den aufgenommenen Gasbestandteilen auch Wasser entfernt, doch würde eine vollständige Entfeuchtung sehr lange Regenerierzeiten und/oder hohe Regeneriertemperaturen erfordern. Beides ist energetisch so aufwendig, daß man aus wirtschaftlichen Erwägungen auf eine völlige Wasserfreiheit des Waschmittels verzichten wird. Als oberste Grenze für den Wassergehalt des Waschmittels sind jedoch erfindungsgemäß 20 Gew-% anzusehen, da bei höheren Wassergehalten die Absorption des NO stark absinkt.

Ein ganz wesentlicher Unterschied zu dem bekannten Verfahren besteht jedoch darin, daß beim erfindungsgemäßen Verfahren während der Absorption und für die Regenerierung keine zusätzlichen Chemikalien benötigt werden.

Als geeignet haben sich organische Verbindungen der allgemeinen Formel

$$R_1\text{-}CH_2\text{-}CHR_2\text{-}R_3,$$

wobei $R_1$ = OH

= O-Alkyl

= Ketogruppe

oder = Estergruppe

$R_2 = \overset{\scriptstyle)}{\underset{\scriptstyle)}{C}}\,$ -

= H

oder = OH

$R_3$ = CH₂OH

= OH

= O-Alkyl

= Ketogruppe

= Estergruppe

= Alkyl-O (cyclisch)

= (O-CH₂CH₂)ₙ-O-Alkyl

oder = (O-CH₂-CH₂-CH₂)ₙ-O-Alkyl

mit n = 1 bis 10

und/oder der allgemeinen Formel

$$R_4\text{-}CH_2\text{-}CH_2\text{-}CH_2\text{-}R_5,$$

wobei $R_4$ = OH

= O-Alkyl

= Ketogruppe

oder = Estergruppe

$R_5$ = OH

= O-Alkyl

= Ketogruppe

= Estergruppe

= (O-CH₂-CH₂-CH₂)ₙ-O-Alkyl

oder = (O-CH₂-CH₂)ₙ-O-Alkyl

mit n = 1 bis 10

erwiesen.

Ferner eignen sich für die Zwecke des erfindungsgemäßen Verfahrens die Mono-und Diether der Oligoethylen-und -propylenglykole.

Als ganz besonders geeignet haben sich erfindungsgemäß aus der erstgenannten Verbindungsgruppe Tetrahydrofurfurylalkohol, Acetonylaceton und insbesondere Tetraethylenglykoldimethylether erwiesen, wobei letzterer speziell gegen Rauchgas außerordentlich stabil ist.

Auch Dimethylsulfoxid ist ein erfindungsgemäß gut geeignetes Lösungsmittel.

Ferner sind Phosphorsäurester sehr gut geeignet, da sie neben einem sehr guten Lösungsvermögen für NO die Vorteile sehr geringer Viskosität bei sehr hohen Siedepunkten besitzen. Und zwar eignen sich Mono-, Di-und Triester, wobei die Mono-und Diester am Phosphoratom substituiert sein, also auch in Form von Phosphonsäureestern vorliegen können. Bei Vorliegen spezieller Anforderungen hinsichtlich Schmelzpunkt, Siedepunkt, Viskosität etc. des Waschmittels ist es erfindungsgemäß auch möglich, Lösungsmittelgemische einzusetzten.

Wesentlich ist beim Erfindungsverfahren, daß das zweiwertige Eisen in Form siner Halogenide, speziell in Form des Chlorids, eingesetzt wird. Dabei scheint es ohne Belang zu sein, ob dem Waschmittel von vornherein FeCl₂ zugesetzt wird oder ob der Lösung der Fe-II-Ionen Chlorid-Ionen in Form einer anderen Chlorverbindung, z.B. HCl, angeboten werden. Die zuletzt erwähnte Salzsäure ist auch deswegen von Vorteil, weil sich, wie erfindungsgemäß ebenfalls festgestellt wurde, eine geringfügige Säuremenge im Waschmittel, etwa 0,1 bis 1 Gew-% günstig auf den Absorptionsvorgang und die Stabilität der Fe-II-Ionen auswirkt.

Ferner hat es sich als zweckmäßig erwiesen, dem Waschmittel, insbesondere bei Einsatz der Etherformen der Lösungsmittel, einen Oxidationsinhibitor, z.B. 4,4'-Butyliden-bis-(6-tert. butyl-m-kresol),zuzusetzen.

Mit dem erfindungsgemäßen Verfahren gelingt es, sowohl $NO/NO_x$ allein als auch $NO/NO_x$ zusammen mit $SO_2$ aus technischen Gasgemischen wie z.B. Rauchgas zu entfernen, da z.B.das $NO_2$ bei Vorhandensein im Gas aufgrund physikalischer Gesetzmäßigkeiten gleichzeitig mit dem NO ausgewaschen wird. Das Waschmittel kann in üblicher Weise mit Dampf regeneriert werden. Das Kondensat aus dem Regenerierdampf hat eine äußerst geringe Löslichkeit für NO, so daß bei der Regenerierung, wenn das Waschmittel allein mit $NO/NO_x$ beladen war, ein hochkonzentriertes NO-Reichgas gewonnen werden kann, das sehr einfach durch Oxidation mit Luft (ohne Katalysator) zu $NO_2$ und anschließend zu konzentrierter Salpetersäure umgesetzt werden kann.

Soll zugleich mit dem NO auch $SO_2$ mitentfernt werden, so dann dies ohne Zuhilfenahme weiterer Verfahrensschritte oder Chemikalien in einem Schritt mit der Entfernung des NO bewerkstelligt werden, denn die erfindungsgemäß vorgeschlagenen Lösungsmittel haben eine sehr gute Löslichkeit gegenüber $SO_2$ bewiesen. Das $SO_2$ geht mit den Eisen-II-Ionen keine Reaktion ein, sondern wird rein physikalisch vom nichtwäßrigen Lösungsmittel gelöst. Beide gelösten Komponenten können dann, ebenso wie das NO allein, mit Dampf aus dem Waschmittel abgestrippt werden.

Für die weitere Behandlung des NO-$SO_2$-Reichgases gibt es zwei Wege.

Der erste Weg besteht darin, das $SO_2$ auszukondensieren, was wegen der hohen Siedepunktsdifferenz zum NO unschwer möglich ist.

Das weitgehend $SO_2$-freie NO-reiche Rauchgas wird dann durch Zugabe von Luft oder Sauerstoff oxidiert, wobei in bekannter Weise $NO_2$ entsteht - (drucklos, ohne Katalysator, 20 bis 30 °C), das in Wasser zu Salpetersäure gelöst wird. Restgase können dann wieder vor die Wäsche gefahren werden. Der zweite Weg besteht darin, das $SO_2$-NO-Reichgas direkt mit Luft oder Sauerstoff zu oxidieren und mit Wasser in Kontakt zu bringen, wobei ein Gemisch von Schwefel-und Salpetersäure entsteht. Die Reaktionen verlaufen hierbei ähnlich wie beim bekannten Bleikammerverfahren. Dieses Säuregemisch kann direkt für die Düngemittelproduktion eingesetzt werden - (Neutralisation mit Mg-, Ca-oder K-Carbonaten oder -Hydroxiden bzw. mit $NH_3$). Alternativ kann das Gemisch auch nach bekannten Verfahren z.B. destillativ zu Schwefelsäure und Salpetersäure aufgetrennt werden. Die Restgase können dann entweder vor die Wäsche zurückgeführt oder in separaten Schritten aufgearbeitet werden.

Soll $SO_2$ getrennt von NO ausgewaschen werden, dann ist die Installation von zwei getrennten Waschkreisläufen notwendig. Der erst dient dann der Entfernung des $SO_2$, derzweite der des NO.

Es ist dabei empfehlenswert, im ersten Waschmittelkreislauf das erfindungsgemäße Waschmittel ohne Zusatz von FE-II-Salzen umlaufen zu lassen, im zweiten jedoch mit Fe-II-Salzen. Das hat den Vorteil, daß in beiden Waschkreisläufen das gleiche Lösungsmittel umläuft, so daß ein Übertritt aus einem in den anderen Kreislauf nicht stört.

Im Prinzip ist est jedoch auch möglich, das $SO_2$ mit einer beliebigen anderen Wäsche, z.B. einer bekannten Kalkmilchwäsche, zu entfernen und das NO anschließend mit dem erfindungsgemäßen Waschmittel. Die Erfindung ermöglicht es daher, bestehende Rauchgasreinigungsanlagen, die bereits mit einer $SO_2$-Wäsche ausgestattet sind, aber das NO nur unbefriedigend oder gar nicht zu entfernen gestatten, mit einer Nach-oder Feinreinigungsstufe auszurüsten, die eine praktisch vollständige NO-Entfernung gewährleistet.

Es wurde festgestellt, daß das für die NO-Aufnahme notwendige Fe-II je nach $O_2$-bzw. $NO_2$-Gehalt des zu reinigenden Gases mehr oder weniger schnell zu inaktivem Fe-III oxidiert wird.

Überraschenderweise hat sich gezeigt, daß ein Zusatz von Fe-III-Salzen die Oxidationsgeschwindigkeit ganz erheblich vermindert. Es hat sich als zweckmäßig erwiesen, dem erfindungsgemäßen Waschmittel Fe-III-Ionen in einer Menge zuzusetzen, die dem 1-bis 6-fachen, vorzugsweise 2-bis 3-fachen der Menge der gelösten Fe-II-Ionen entspricht.

Da sich durch die Zugabe von Fe-III-Ionen die Oxidation der Fe-II-Ionen zwar erheblich verlangsamen, aber doch nicht gänzlich unterdrücken läßt, ist es notwendig, die Konzentration der Fe-II-Ionen im Waschmittel von Zeit zu Zeit oder laufend in einer Teilmenge des Waschmittels zu erhöhen.

Hierzu stehen erfindungsgemäß mehrere Methoden zur Auswahl:

A) Zugabe wäßriger Hydroxylaminhydrochlorid-Lösung,

B) Elektrolyse zum Zwecke kathodischer Reduktion,

C) Zugabe von metallischem Eisen.

Das Verfahren A) hat den Vorteil, daß bei der Reaktion keine Produkte gebildet werden, die den Waschvorgang oder die weitere Verarbeitung der Gase stören könnten. Außerdem erfolgt die Umsetzung, bezogen auf das Hydroxyl, mit 60 bis 95 %iger Ausbeute und in einer sehr kurzen Zeit (10 bis 60 sec).

Das Verfahren B) ist an das Vorhandensein von elektrischem Strom gebunden. Doch ist dieser in der Regel wohlfeil verfügbar, speziell natürlich bei der Rauchgasreinigung in Kraftwerken. Als Kathodenmaterial kommen praktisch alle gängigen Materialien, vorzugsweise Eisen oder Nickel, als Anodenmaterial alle gängigen Materialien, vorzugsweise Kohle oder Graphit, in Betracht. Die Form und Anordnung der Elektroden und des Diaphragmas spielen für die Wirtschaftlichkeit der elektrolytischen Reduktion, nicht dagegen für deren Funktionsfähigkeit eine Rolle. Es muß lediglich dafür gesorgt werden, daß die Reaktionsräume möglichst gleichmäßig von der Waschlauge durchströmt werden. Erfindungsgemäß kann die Temperatur der Elektrolysezelle im Bereich von 0 bis 100 °C liegen. Die günstigsten Stromausbeuten werden indessen im Bereich von 10 bis 30 °C erreicht.

Am zweckmäßigsten hat sich jedoch zur Reduktion überschüssiger Fe-III-Ionen das erfindungsgemäße Verfahren C) erwiesen.

Da das Waschmilieu in der Regel schwach sauer ist, entweder durch im Rauchgas enthaltene saure Komponenten oder durch einen Säurezusatz, erfolgt der Umsatz zwischen dem elementaren Fe und den Fe-III-Ionen unter Bildung von Fe-II-Ionen glatt. Das elementare Eisen kann erfindungsgemäß in Form von Pulver, Spänen, Blechstücken etc. auf den Kopf der Waschsäule aufgegeben werden. Diese erfindungsgemäße Art der Reduktion überschüssiger Fe-III-Ionen hat den überragenden Vorteil, daß bei der Reaktion keine andersartigen Produkte entstehen als ohnehin im Waschmittel vorhanden sind.

Allerdings findet bei dieser Verfahrensführung eine Anreicherung von Fe-III-Ionen statt, die bei längeren Betriebszeiten Maßnahmen zu ihrer Entfernung notwendig machen.

Wie festgestellt wurde, ist es hierzu keineswegs notwendig, die gesamte Waschmittelmenge zu regenerieren, sondern es genügt, einen Teilstrom aus dem Waschmittel, etwa 0,01 bis 0,1 % des umlaufenden Waschmittels abzuzweigen und einer Behandlung zu unterwerfen, die eine Senkung der Fe-III-Ionen-Konzentration durch Abtrennung bewirkt.

Erfindungsgemäß kann dies mit Ionenaustauschern erfolgen.

Ganz besonders bewährt haben sich jedoch zwei erfindungsgemäße Varianten, die im folgenden kurz geschildert seien:

C1) Vakuumdestillation,
C2) Ausfällung mit wäßriger Natronlauge.

Bei der Verfahrensvariante C1) wird ein abgezweigter Teilstrom des mit Salzen beladenen Waschmittels insgesamt einer Vakuumdestillation unterworfen. Das organische Lösungsmittel läßt sich dabei problemlos von den übrigen Bestandteilen abdestillieren. Wie festgestellt werden konnte, geht die im Waschmittel gelöste Salzsäure mit ins Destillat und kann somit gleich wieder in der Wäsche verwendet werden, was zur Senkung der Betriebskosten beiträgt. Der zurückbleibende Sumpf bleibt pumpfähig und kann auf eine Deponie verbracht werden.

Obwohl die Fe-Ionen in den erfindungsgemäßen Lösungsmitteln komplex gebunden sind, ist es überraschenderweise möglich, sie mit wäßriger NaOH-Lösung gemäß

$$FeCl_3 + 3NaOH = 3NaCl + Fe(OH)_3$$

auszufällen (Verfahrensvariante C2).

Erfindungsgemäß ist es dabei günstig, eine 50 %iger NaOH-Lösung einzusetzen, um möglichst wenig Wasser in das Waschmittel einzubringen. Es hat sich nämlich gezeigt, daß konzentrierte NaOH-Lösung in den erfindungsgemäßen Lösungsmitteln praktisch unlöslich ist. Da NaCl in den erfindungsgemäßen Lösungsmitteln überraschend gering löslich ist, werden die Neutralisationsprodukte der obigen Reaktion alle zusammen ausgefällt und lassen sich durch Sedimentation oder Filtration leicht vom Lösungsmittel scheiden.

Die Überlegenheit des erfindungsgemäßen Waschmittels über die bekannten wäßrigen Fe-II-Salzlösungen sei durch einige Zahlen verdeutlicht.

NO-Gleichgewichtsbeladungen

1. Waschmittel mit 0,1 mol/l $Fe^{++}$-Ionen

Rauchgas mit 0,85 mbar NO-Partialdruck

Temperatur 25 °C

| Lösungsmittel | Gleichgewichtsbeladung (ml NO/l) |
|---|---|
| Diethylenglykolmonoethylester | 1200 |
| Triethylenglykoldimethylether | 510 |
| Tetrahydrofurfurylalkohol | 820 |
| Dimethylsulfoxid | 520 |
| Acetonylaceton | 1010 |

| | |
|---|---|
| 60-80 Gew-% Tetraethylenglykoldimethylether | |
| 15-25 " Triethylenglykoldimethylether | |
| 2,5-7,5 " Pentaethylenglykoldimethylether | |
| 2,5-7,5 " Pentaethylenglykolmonomethylether | 1750 |

2) Waschmittel mit 0,1 mol/l $Fe^{++}$ -Ionen und 0,15 mol HCl

Rauchgas mit 0,56 mbar NO-Partialdruck

Temperatur 25 °C

| Lösungsmittel | Gleichgewichtsbeladung (ml NO/l) |
|---|---|
| Trimethylphosphat | 613 |
| Tributylphosphat | 1664 |
| Triethylphosphonoacetat | 1850 |

3) Waschmittel mit verschiedenen $Fe^{++}$ - Konzentrationen

Rauchgas mit 0,85 mbar NO-Partialdruck

Temperatur 25 °C

Lösungsmittel

60-80 Gew-% Tetraethylenglykoldimethylether

15-25 Gew-% Triethylenglykoldimethylether

2,5-7,5 Gew-% Pentaethylenglykoldimethylether

2,5-7,5 Gew-% Pentaethylenglykolmonomethyle-ther

| $Fe^{++}$-Konzentration (mol/l) | Gleichgewichtsbeladung (ml NO/l) |
|---|---|
| 0,06 | 1180 |
| 0,10 | 1750 |
| 0,15 | 2700 |

4) Waschmittel:

Wasser mit 0,95 mol/l Fe$^{++}$ -Ionen und 0,2 mol/l H$_2$SO$_4$

Rauchgas mit 0,85 mbar NO-Partialdruck

Temperatur 25 °C

Gleichgewichtsbeladung

68 ml NO/l.

Schon diese Zahlen beweisen, daß das erfindungsgemäße Waschmittel die bekannte wäßrige Fe-II-Salzlösung an Lösefähigkeit für das NO um ein bis zwei Zehnerpotenzen übertrifft.

Aufnahmegeschwindigkeit

Jedoch ist neben der Gleichgewichtsbeladung für die Wirtschaftlichkeit einer Gaswäsche die Aufnahmegeschwindigkeit für die zu entfernenden Komponenten eine wesentliche Größe. Auch hierin ist das erfindungsgemäße Lösungsmittel dem bekannten weit überlegen.

So erreichen die oben erwähnten Lösungen 1) und 3) in 70 sec 80 bis 90 % ihrer Sättigungsbeladung, während die Lösung 4) nach dieser Zeit erst etwa 5 % ihrer Sättigungsbeladung erreicht hat.

Die Erfindung sei nunmehr anhand mehrerer Zahlenbeispiele noch näher verdeutlicht.

Beispiel I

Simultane NO-und SO$_2$-Auswaschung

1) Zusammensetzung des Rauchgases (bezogen auf wasserfreies Gas) bei 25 °C:

CO$_2$ 9 Vol-%

O$_2$ 7 Vol-%

SO$_2$ 511 Vppm

NO 480 Vppm

N$_2$ Rest.

2) Zusammensetzung des Waschmittels (bezogen auf Trockenbasis):

60-80 Gew-% Tetraethylenglykoldimethylether

15-25 Gew-% Triethylenglykoldimethylether

2,5-7,5 Gew-% Pentaethylenglykoldimethylether

2,5-7,5 Gew-% Pentaethylenglykolmonomethylether

mit 2 Gew-% FeCl$_2$-4H$_2$O

1 Gew-% 4,4'-Butyliden-bis-(6-tert.butyl-m-kresol)

0,1 Gew-% H$_2$SO$_4$

0,5 Gew-% HCl.

3) Waschsäule:

Durchmesser 100 mm

Füllhöhe 1500 mm

Füllkörper 15 x 15 mm Berl-Sättel

Gasdurchsatz (von unten nach oben): 25 Nm$^3$/h

Waschmittelaufgabe (von oben nach unten): 50 l/h.

4) Ergebnis:

Am Austritt der Wäsche war der Gehalt des gereinigten Gases an SO$_2$ auf 3 Vppm, an NO auf kleiner 5 Vppm abgesunken.

5) Regenerierung

Die Regenerierung erfolgte bei 80 bis 90 °C im Vakuum, wobei ein SO$_2$-und NO-reiches Gas folgender Zusammensetzung gewonnen wurde - (bezogen auf wasserfreies Gas):

NO 40,2 Vol-%

SO$_2$ 40,1 Vol-%

N$_2$, CO$_2$ Rest.

Beispiel II

Entstickung eines $SO_2$-freien Rauchgases

1) Zusammensetzung des Rauchgases (bezogen auf wasserfreies Gas) bei 25 °C:

CO₂ 9,8 Vol-%

O₂ 6,3 Vol-%

NO 800 Vppm

N₂ Rest.

2) Zusammensetzung des Waschmittels (bezogen auf Trockenbasis):

60-80 Gew-% Tetraethylenglykoldimethylether

15-25 Gew-% Triethylenglykoldimethylether

2,5-7,5 Gew-% Pentaethylenglykoldimethylether

2,5-7,5 Gew-% Pentaethylenglykolmonomethylether

mit 2,6 Gew-% $FeCl_2 \cdot 4H_2O$

1 Gew-% 4,4'-Butyliden-bis-(6-tert.butyl-m-kresol)

0,1 Gew-% $H_2SO_4$

0,5 Gew-% HCl.

3) Waschsäule:

Durchmesser 100 mm

Füllhöhe 1500 mm

Füllkörper 15 x 15 mm Berl-Sättel

Gasdurchsatz (von unten nach oben): 25 Nm³/h

Waschmittelaufgabe (von oben nach unten): 50 l/h.

4) Ergebnis:

Am Austritt der Wäsche war der Gehalt des gewaschenen Gases an NO auf unter 10 Vppm abgesunken.

5) Regenerierung:

Die Regenerierung erfolgte bei 80 bis 90°C im Vakuum, wobei ein NO-reiches Gas folgender Zusammensetzung gewonnen wurde (bezogen auf wasserfreies Gas):

NO 85 Vol-%

N₂, CO₂ Rest.

Beispiel III

Simultane NO-und $SO_2$-Auswaschung aus synthetischem Rauchgas

1) Zusammensetzung des Rauchgases bei 22 °C:

| | |
|---|---|
| CO₂ | ca. 10 Vo.-% |
| O₂ | ca. 5 Vol-% |
| NO } SO₂ } | siehe Tabelle 1 |
| N₂ | Rest |
| H₂O | Taupunkt ca. 15 °C. |

2) Zusammensetzung des Waschmittels:

60-80 Gew-% Tetraethylenglykoldimethylether

15-25 Gew-% Triethylenglykoldimethylether

2,5-7,5 Gew-% Pentaethylenglykoldimethylether

2,5-7,5 Gew-% Pentaethylenglykolmonomethylether

mit 3,7 Gew-% $FeCl_2 \cdot 4H_2O$

0,9 Gew-% 4,4'-Butyliden-bis-(6-tert.butyl-m-kresol)

0,45 Gew-% HCl

1,5 Gew-% $H_2O$.

3) Waschsäule:

Durchmesser 27 mm

Füllhöhe 450 mm

Füllkörper 5 x 5 mm Berl-Sättel.

4) Ergebnis:

Siehe Tabelle 1.

5) Regenerierung:

Die Regenerierung erfolgte in einer Regeneriersäule gleicher Beschaffenheit wie die Waschsäule bei etwa 80 °C mit 230 l/h $N_2$ als Regeneriergas.

Beispiel IV

Simultane NO-und $SO_2$-Auswaschung aus synthetischem Rauchgas

1) Zusammensetzung des Rauchgases bei 22 °C:

| | |
|---|---|
| $CO_2$ | ca. 10 Vol-% |
| $O_2$ | ca. 5 Vol-% |
| NO | siehe Tabelle 2 |
| $SO_2$ | |
| $N_2$ | Rest |
| $H_2O$ | Taupunkt ca. 15 °C. |

2) Zusammensetzung des Waschmittels:

Tributylphosphat

mit 3,2 Gew-% $FeCl_2 \cdot 4H_2O$

0,4 Gew-% HCl

1,3 Gew-% $H_2O$.

3) Waschsäule:

Durchmesser 27 mm

Füllhöhe 450 mm

Füllkörper 5 x 5 mm Berl-Sättel.

4) Ergebnis:

Siehe Tabelle 2.

**5) Regenerierung:**

Die Regenerierung erfolgte in einer Regeneriersäule gleicher Beschaffenheit wie die Waschsäule bei etwa 80 °C mit 100 l/h $N_2$ als Regeneriergas.

**2) Zusammensetzung des Waschmittels (bezogen auf Trockenbasis):**

60-80 Gew-% Tetraethylenglykoldimethylether

15-25 Gew-% Triethylenglykoldimethylether

2,5-7,5 Gew-% Pentaethylenglykoldimethylether

2,5-7,5 Gew-% Pentaethylenglykolmonomethylether

mit 2,0 Gew-% $FeCl_2 \cdot 4H_2O$

4,9 Gew-% $FeCl_3 \cdot 6H_2O$

1,0 Gew-% 4,4'-Butyliden-bis-(6-tert.butyl-m-kresol)

0,5 Gew-% HCl.

**Beispiel V**

Simultane NO-und $SO_2$-Auswaschung aus synthetischem Rauchgas mit Fe-Zugabe

1) Zusammensetzung des Rauchgases (bezogen auf wasserfreies Gas) bei 25 °C:

$CO_2$      ca. 10 Vol-%

$O_2$

NO      siehe Tabelle 3

$SO_2$

$N_2$      Rest.

**3) Waschsäule:**

Füllhöhe 450 mm

Füllkörper 5 x 5 mm Berl-Sättel

Temperatur ca. 22 °C

Gasdurchsatz (von unten nach oben): siehe Tabelle 3

Waschmittelaufgabe (von oben nach unten): siehe Tabelle 3

Eisenpulverzugabe: 2 g (portionsweise)

Fe-II-Gehalt: 5-10 g/l.

**4) Ergebnis:**

siehe Tabelle 3.

**5) Regenerierung:**

Die Regenerierung erfolgte in einer Regeneriersäule bei etwa 80 °C mit 230 l/h $N_2$ als Regeneriergas.

# Tabelle 1

| Versuch Nr. | Rauchgas | | Gewaschenes Gas | | Reinigungsleistung | | Gasdurchsatz | Waschmittel-durchsatz | Verhältnis Gas:Flüssigkeit |
|---|---|---|---|---|---|---|---|---|---|
| | NO Vppm | $SO_2$ Vppm | NO Vppm | $SO_2$ Vppm | NO % | $SO_2$ % | 1/h | 1/h | |
| 1 | 544 | 685 | 23 | 20 | 95 | 97 | 292 | 1,1 | 265 |
| 2 | 491 | 600 | 23 | 20 | 94 | 96 | 332 | 1,1 | 302 |
| 3 | 490 | 600 | 160 | 40 | 67 | 93 | 332 | 0,32 | 1040 |

# Tabelle 2

| Versuch Nr. | Rauchgas | | Gewaschenes Gas | | Reinigungsleistung | | Gasdurchsatz | Waschmittel-durchsatz | Verhältnis Gas:Flüssigkeit |
|---|---|---|---|---|---|---|---|---|---|
| | NO Vppm | $SO_2$ Vppm | NO Vppm | $SO_2$ Vppm | NO % | $SO_2$ % | 1/h | 1/h | |
| 1 | 758 | 500 | 37 | O | 95 | 100 | 274 | 0,82 | 334 |
| 2 | 1170 | 3000 | 29 | 25 | 97,5 | 99 | 119 | 0,82 | 145 |
| 3 | 1040 | 1000 | 22 | 40 | 97,9 | 96 | 274 | 0,33 | 830. |

Tabelle 3

| Versuch Nr. | Rauchgas | | | Gewaschenes Gas | | Reinigungsleistung | | Gasdurchsatz | Waschmittel-durchsatz | Verhältnis |
| | NO Vppm | SO$_2$ Vppm | O$_2$ V% | NO Vppm | SO$_2$ Vppm | NO % | SO$_2$ % | l/h | l/h | Gas:Flüssigkeit |
|---|---|---|---|---|---|---|---|---|---|---|
| 1 | 544 | 685 | 5,2 | 23 | 20 | 95 | 97 | 292 | 1,1 | 265 |
| 2 | 491 | 600 | 4,6 | 23 | 20 | 94 | 96 | 332 | 1,1 | 302 |
| 3 | 490 | 600 | 4,6 | 160 | 40 | 67 | 93 | 332 | 0,32 | 1040 |
| 4 | 971 | 1000 | 4,8 | 340 | 40 | 66 | 96 | 156 | 0,32 | 488 |
| 5 | 970 | 1000 | 4,8 | 183 | 30 | 81 | 97 | 158 | 1,10 | 144 |
| 6 | 550 | 600 | 4,7 | 91 | 35 | 83 | 94 | 270 | 1,70 | 159 |

Beispiel VI

Simultane NO-und SO$_2$-Auswaschung aus Rauchgas mit Eisenzusatz und Entsalzung

1) Zusammensetzung des Rauchgases:

350 000 Nm$^3$/h Rauchgas

mit 500 ppm NO

900 ppm SO$_2$

6 % O$_2$.

```
mit 12,6 t konz.Salzsäure (33 %ig) = 4,2 t HCl        4,05 t Cl⁻
        18,0 t FeCl₃-6H₂O                      3,73 t Fe   7,10 t Cl⁻
         0,4 t Fe-Pellets                       0,40 t Fe
```

b) beim Betrieb:

180,0 t 60-80 Gew-% Tetraethylenglykoldimethylether

15-25 Gew-% Triethylenglykoldimethylether

2,5-7,5 Gew-% Pentaethylenglykoldimethylether

2,5-7,5 Gew-% Pentaethylenglykolmonomethylether

mit 8 t Fe (davon 0,9 t als Fe-II)

19 t Cl⁻

10 t H$_2$O (Bereich: 10 -20 t)

2) Zusammensetzung des Waschmittels:

a) beim Start:

180,0 t 60-80 Gew-% Tetraethylenglykoldimethylether

15-25 Gew-% Triethylenglykoldimethylether

2,5-7,5 Gew-% Pentaethylenglykoldimethylether

2,5-7,5 Gew-% Pentaethylenglykolmonomethylether

3) Waschsäule bzw. Wäsche:

Rauchgasdurchsatz: 400 000 m$^3$/h (eff.) = 111 m$^3$/s (eff.)

Waschmittelfüllung: 160 m$^3$

Waschmittelumlauf: 800 m$^3$/h

Temperatur: 25 -30 °C.

4) Ergebnis:

Produkte (stöchiom.): 440 kg/h HNO$_3$

1310 kg/h H$_2$SO$_4$

Reinigungsleistung für NO über 90 %

Reinigungsleistung für SO$_2$ über 95 %.

5) Regeneriersäule bzw. Regenerierung:

    Strippdampf: 7000 m³/h (eff.)

Waschlösung: 800 m³/h

Temperatur: 150 °C

157 m³/h = 210 kg/h NO

300 m³/h = 860 kg/h $SO_2$.

6) Kontinuierliche Zugabe von Reduktionsmitteln:

    Fe: 0,3 t/d

HCl: 1,8 t/d (33 %ig) = 0,6 t/d HCl.

7) Entsalzung eines Teilstromes des Waschmittels:

    a) Fällung mit Natronlauge

Zu behandelndes Waschmittel 8,1 t/d

NaOH (z.B. als 50 %ige Lösung) 0,82 t/d

HCl (z.B. als 33 %ige Lösung) 0,16 t/d

Lösungsmittel (Make-up) 0,10 t/d

Waschwasser (entionisiert) 2,0 t/d

Ausfallendes $Fe(OH)_3$ (wasserfrei) 0,58 t/d

Ausfallendes NaCl (wasserfrei) 1,21 t/d.
    b) Vakuumdestillation

zu behandelndes Waschmittel 8,1 t/d

Destillat incl. HCl 90 %

Extraktion des Rückstandes 90 %

Lösungsmittel (Make-up) 0,10 t/d

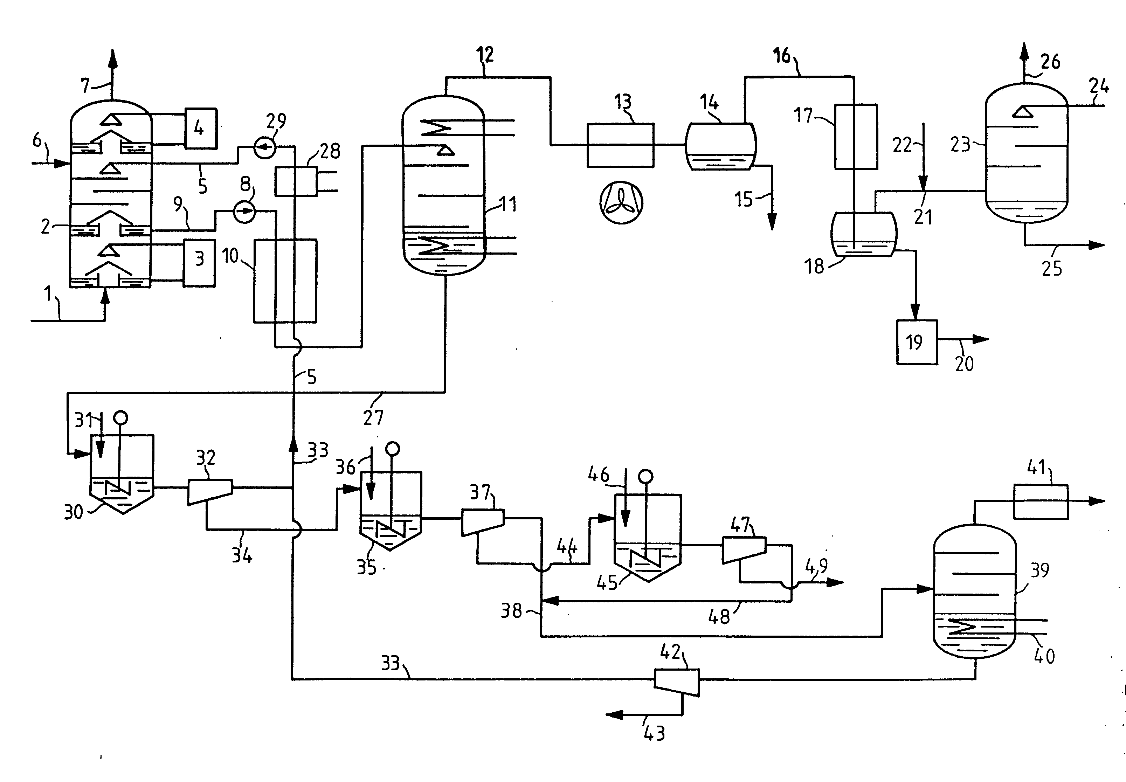

Die Erfindung sei weiterhin anhand des in der Figur schematisch dargestellten Ausführungsbeispiels noch näher erläutert.

Das Ausführungsbeispiel zeigt eine simultane NO-und $SO_2$-Auswaschung aus Rauchgas, wobei der Waschsäule von Zeit zu Zeit geringe Mengen elementaren Eisens zugesetzt werden.

350 000 Nm³/h Rauchgas mit 500 ppm NO und 900 ppm $SO_2$ treten durch Leitung 1 von unten in eine Waschsäule 2 ein.

Die Waschsäule 2 besteht aus einem unteren, einem mittleren und einem oberen Abschnitt. Im unteren Abschnitt wird das Rauchgas zur Entfernung von Staub, Ruß, HCl und HF mit Wasser gewaschen. Die Aufbereitung des die Schmutzfracht führenden Wassers ist lediglich schematisch durch den Block 3 dargestellt. Im oberen Abschnitt der Waschsäule 2 ist ein weiterer Wasserwaschkreislauf installiert, dessen Aufbereitung ebenfalls nur schematisch durch Block 4 dargestellt ist, der die Aufgabe hat, aus dem mittleren Abschnitt der Waschsäule 2 mitgerissene Waschmitteltröpfchen zurückzuwaschen, um die Waschmittelverluste gering zu halten.

Das Rauchgas tritt somit vorgereinigt aus dem unteren in den mittleren Abschnitt der Waschsäule 2 ein, wo es mit 800 m³/h durch Leitung 5 aufgegebenen Waschmittels (Komponenten siehe Beispiel VI) berieselt wird. Das Waschmittel nimmt dabei das im Rauchgas enthaltene NO und $SO_2$ auf. Um das im Waschmittel enthaltene Fe-II, dessen Konzentration durch Oxidation zu Fe-III langsam abnimmt, wieder zu ersetzen, kann in die Waschsäule durch Leitung 6 von Zeit zu Zeit pulverförmiges Eisen eingeführt werden. Das gewaschene Rauchgas tritt dann in den oberen Abschnitt der Waschsäule 2 ein, wird von mitgerissenem Waschmittel befreit und verläßt die Anlage durch Leitung 7.

Beladenes Waschmittel wird mit Hilfe einer Pumpe 8 durch Leitung 9 abgezogen, im Wärmeaustauscher 10 erwärmt und in den oberen Teil einer Regeneriersäule 11 eingespeist, die mit Sumpfheizung und Kopfkühlung ausgestattet ist. In dieser Regeneriersäule 11 wird das beladene Waschmittel durch Erhitzen von den darin gelösten Gasbestandteilen NO und $SO_2$ befreit, die die Säule als Reichgas durch Leitung 12 verlassen.

Das Reichgas wird im Luftkühler 13 abgekühlt und dabei kondensierendes Wasser im Abscheider 14 abgetrennt und durch Leitung 15 entfernt. Maximal sind dies 5 t/h. Etwa 700 m³/h Reichgas gelangen dann durch Leitung 16 in den Kühler 17, in dem die Kondensationstemperatur des $SO_2$ unterschritten wird. Das kondensierende $SO_2$ (860 kg/h) wird im Abscheider 18 vom Gas getrennt und in einer nur als Block 19 dargestellten Anlage zu Schwefelsäure aufgearbeitet. Die Anlage liefert durch Leitung 20 etwa 1310 kg/h $H_2SO_4$.

Das durch Leitung 21 aus dem Abscheider 18 entweichende, NO-reiche Gas wird durch Leitung 22 mit Luft versetzt und einem Rieselturm 23 zugeführt, in dem es mit Wasser (Leitung 24) berieselt und dabei unter Zwischenbildung von salpetriger Säure in 40 bis 50 %ige Salpetersäure umgewandelt wird. Durch Leitung 25 können der Anlage 440 kg/h $HNO_3$ entnommen werden. Nicht umgesetztes Gas aus Leitung 26 wird in der Regel wieder dem zu verarbeitenden Rauchgas zugeführt.

Vom Fuß der Regeneriersäule 11 fließt durch Leitung 27 das regenerierte Waschmittel ab. Ein Teil wird durch Leitung 5 über den Wärmeaustauscher 10 und einen Wasserkühler 28 mit Hilfe einer Pumpe 29 auf den mittleren Abschnitt der Waschsäule 2 gepumpt, während der Rest, nämlich 340 l/h, in einen Rührkessel 30 überführt wird. Dem Rührkessel 30 wird durch Leitung 31 eine angemessene Menge 50 %iger wäßriger NaOH-Lösung zugeführt, um die im Waschmittel enthaltenen Fe-III-Ionen als $Fe(OH)_3$ auszufällen.

Das Reaktionsgemisch gelangt dann in einen Dekanter 32. Waschmittel mit einem verminderten Gehalt an Fe-III-Ionen wird über Leitung 33 Leitung 5 zugeführt, während $Fe(OH)_3$-Schlamm über Leitung 34 in einen zweiten Rührkessel 35 gelangt, wo er mit Wasser (Leitung 36) verdünnt wird.

Das Gemisch kommt dann in einen Dekanter 37. Nach Sedimentation des Schlammes wird überstehendes Waschmittel durch Leitung 38 einer Abtriebssäule 39 zugeführt, wo dem Waschmittel durch Heizung mittels einer Dampfspirale 40 Wärme zugeführt wird, die eine Verdampfung von Wasser bewirkt, das über Kopf abzieht und in einem Wasserkühler 41 verflüssigt wird. Die Sumpfflüssigkeit fließt in einen Dekanter 42, wo sich NaCl absetzt, das über Leitung 43 in eine Deponie überführt wird, während entsalztes Waschmittel über Leitung 33 zu Leitung 5 gelangt.

Schlamm aus dem Dekanter 37 wird durch Leitung 44 in einen dritten Rührkessel 45 überführt und dort nochmals mit Wasser (Leitung 46) versetzt. In einem Dekanter 47 erfolgt eine Trennung in Waschmittel und Schlamm. Das Waschmittel gelangt durch Leitung 48 zu Leitung 38, während der Schlamm durch Leitung 49 zu einer Deponie gebracht wird.

## Ansprüche

1. Verfahren zum Auswaschen von NO und/oder $SO_2$ aus NO-und/oder $SO_2$-haltigen Gasgemischen mit einem Eisen-II-Salze und Lösungsmittel enthaltenden Waschmittel, dadurch gekennzeichnet, daß als Lösungsmittel ein praktisch wasserfreies nichtwäßriges Lösungsmittel eingesetzt und das Waschmittel nach Beladung mit NO und/oder $SO_2$ durch Regenerierung von diesen befreit und wieder eingesetzt wird.

2. Verfahren nach Anspruch 1, dadurch gekennzeichnet, daß als Lösungsmittel

Verbindungen der allgemeinen Formel

$R_1$-$CH_2$-$CHR_2$-$R_3$,

wobei $R_1$ = OH

= O-Alkyl

= Ketogruppe

oder = Estergruppe

$R_2 = \overset{,}{\underset{,}{C}} -$

= H

oder = OH

$R_3 = CH_2OH$

= OH

= O-Alkyl

= Ketogruppe

= Estergruppe

= Alkyl-O (cyclisch)

= $(O\text{-}CH_2CH_2)_n$-O-Alkyl

oder = $(O\text{-}CH_2\text{-}CH_2\text{-}CH_2)_n$-O-Alkyl

mit n = 1 bis 10

eingesetzt werden.

3. Verfahren nach Anspruch 1, dadurch gekennzeichnet, daß als Lösungsmittel

Verbindungen der allgemeinen Formel

$R_4$-$CH_2$-$CH_2$-$CH_2$-$R_5$,

wobei $R_4$ = OH

= O-Alkyl

= Ketogruppe

oder = Estergruppe

$R_5$ = OH

= O-Alkyl

= Ketogruppe

= Estergruppe

$$= (O\text{-}CH_2\text{-}CH_2\text{-}CH_2)_n\text{-}O\text{-}Alkyl$$

$$oder = (O\text{-}CH_2\text{-}CH_2)_n\text{-}O\text{-}Alkyl$$

mit n = 1 bis 10

eingesetzt werden.

4. Verfahren nach Anspruch 1, dadurch gekennzeichnet, daß als Lösungsmittel Oligoethylenglykole und deren Mono-und Diether eingesetzt werden.

5. Verfahren nach Anspruch 1, dadurch gekennzeichnet, daß als Lösungsmittel Oligopropylenglykole und deren Mono-und Diether eingesetzt werden.

6. Verfahren nach Anspruch 1, dadurch gekennzeichnet, daß als Lösungsmittel Dimethylsulfoxid eingesetzt wird.

7. Verfahren nach Anspruch 1 oder 2, dadurch gekennzeichnet, daß als Lösungsmittel Tetrahydrofurfurylalkohol eingesetzt wird.

8. Verfahren nach den Ansprüchen 1 oder 2, dadurch gekennzeichnet, daß als Lösungsmittel Tetraethylenglykoldimethylether eingesetzt wird.

9. Verfahren nach den Ansprüchen 1 oder 2, dadurch gekennzeichnet, daß als Lösungsmittel Acetonylaceton eingesetzt wird.

10. Verfahren nach Anspruch 1, dadurch gekennzeichnet, daß als Lösungsmittel Phosphorsäureester eingesetzt werden.

11. Verfahren nach Anspruch 10, dadurch gekennzeichnet, daß als Lösungsmittel Phosphorsäuremono-bis -triester eingesetzt werden.

12. Verfahren nach Anspruch 11, dadurch gekennzeichnet, daß als Lösungsmittel am Phosphoratom substituierte Phosphorsäuremono-und -diester eingesetzt werden.

13. Verfahren nach Anspruch 12, dadurch gekennzeichnet, daß als Lösungsmittel Phosphonsäureester eingesetzt werden.

14. Verfahren nach einem oder mehreren der Ansprüche 1 bis 13, dadurch gekennzeichnet, daß als Lösungsmittel Gemische der in den Ansprüchen 2 bis 13 beanspruchten Lösungsmittel eingesetzt werden.

15. Verfahren nach einem oder mehreren der Ansprüche 1 bis 14, dadurch gekennzeichnet, daß das Waschmittel maximal 20 Gew-% Wasser enthält.

16. Verfahren nach Anspruch 15, dadurch gekennzeichnet, daß das Waschmittel maximal 10 Gew-% Wasser enthält.

17. Verfahren nach einem oder mehreren der Ansprüche 1 bis 16, dadurch gekennzeichnet, daß dem Waschmittel Halogenid-Ionen zugesetzt werden.

18. Verfahren nach Anspruch 17, dadurch gekennzeichnet, daß dem Waschmittel Chlorid-Ionen zugesetzt werden.

19. Verfahren nach einem oder mehreren der Ansprüche 1 bis 18, dadurch gekennzeichnet, daß dem Waschmittel ein Oxidationsinhibitor zugesetzt wird.

20. Verfahren nach Anspruch 19, dadurch gekennzeichnet, daß dem Waschmittel 0,1 bis 1 Gew-% 4,4'-Butyliden-bis -(6-tert. butyl-m-kresol) zugesetzt werden.

21. Verfahren nach einem oder mehreren der Ansprüche 1 bis 20, dadurch gekennzeichnet, daß das Waschmittel 0,1 bis 1 Gew-% Säure enthält.

22. Verfahren nach einem oder mehreren der Ansprüche 1 bis 21, dadurch gekennzeichnet, daß dem Waschmittel Fe-III-Salze zugesetzt werden.

23. Verfahren nach einem oder mehreren der Ansprüche 1 bis 21, dadurch gekennzeichnet, daß dem Waschmittel wäßrige Hydroxylaminhydrochlorid-Lösung zugesetzt wird.

24. Verfahren nach einem oder mehreren der Ansprüche 1 bis 21, dadurch gekennzeichnet, daß dem Waschmittel metallisches Eisen zugesetzt wird.

25. Verfahren nach einem oder mehreren der Ansprüche 1 bis 24, dadurch gekennzeichnet, daß das NO und das $SO_2$ in einem Verfahrensschritt ausgewaschen werden.

26. Verfahren nach einem oder mehreren der Ansprüche 1 bis 24, dadurch gekennzeichnet, daß das NO und das $SO_2$ in zwei getrennten Verfahrensschritten ausgewaschen werden.

27. Verfahren nach einem oder mehreren der Ansprüche 1 bi-26, dadurch gekennzeichnet, daß die Regenerierung des beladenen Waschmittels durch Einblasen von Dampf und/oder einem inerten Gas erfolgt.

28. Verfahren nach einem oder mehreren der Ansprüche 1 bis 26, dadurch gekennzeichnet, daß die Regenerierung des beladenen Waschmittels durch Erniedrigung des Druckes über dem Waschmittel erfolgt.

29. Verfahren nach einem oder mehreren der Ansprüche 1 bis 26, dadurch gekennzeichnet, daß die Regenerierung des beladenen Waschmittels durch Erhitzung erfolgt.

30. Verfahren nach einem der Ansprüche 1 bis 29, dadurch gekennzeichnet, daß das bei der Regenerierung freigesetzte NO zu $HNO_3$ umgesetzt wird.

31. Verfahren nach einem der Ansprüche 27 bis 29, dadurch gekennzeichnet, daß das bei der Regenerierung freigesetzte $SO_2$ zu $H_2SO_4$ umgesetzt wird.

32. Verfahren nach einem der Ansprüche 27 bis 29, dadurch gekennzeichnet, daß das bei der Regenerierung freigesetzte NO mit $NH_3$ zu $N_2$ umgesetzt wird.

33. Verfahren nach einem oder mehreren der Ansprüche 27 bis 32, dadurch gekennzeichnet, daß ein Teil des regenerierten Waschmittels abgezweigt, einer kathodischen Reduktion des darin enthaltenen Fe-III zu Fe-II unterworfen und wieder zum restlichen Waschmittel zurückgeführt wird.

34. Verfahren nach einem oder mehreren der Ansprüche 24 und 27 bis 32, dadurch gekennzeichnet, daß ein Teil des regenerierten Waschmittels abgezweigt und zur Abtrennung des Lösungsmittels von den übrigen Komponenten des Waschmittels einer Vakuumdestillation unterworfen und das abdestillierte Lösungsmittel wieder zum restlichen Waschmittel zurückgeführt wird.

35. Verfahren nach einem oder mehreren der Ansprüche 24 und 27 bis 32, dadurch gekennzeichnet, daß ein Teil des regenerierten Waschmittels abgezweigt, zur Ausfällung darin enthaltener Fe-III-Salze mit wäßriger NaOH-Lösung versetzt und nach Abtrennung der Neutralisationsprodukte wieder zum restlichen Waschmittel zurückgeführt wird.